# EUROPEAN PATENT APPLICATION

(11) **EP 4 545 215 A1**
(43) Date of publication of application: **30.04.2025**
(21) Application number: 24204161.4
(22) Date of filing: 02.10.2024
(51) Int. Cl.: B22F 5/04, B22F 7/08, B22F 10/28, F01D 5/00, B22F 3/11, B23P 6/00, B33Y 80/00, B23K 20/16, B22F 10/38, B23K 1/00, B33Y 10/00, B23K 1/002, B23K 1/008, B23K 1/012, B22F 7/06

(54) **METAL POROUS REGION FOR COMPONENT PRINTED ON REPLACEMENT REGION OR BASE REGION OF COMPONENT**

(30) Priority: 27.10.2023 US 202318495816
(71) Applicant: General Electric Technology GmbH, 5400 Baden (CH)
(72) Inventor: SALM, Jacob Andrew, Greenville, 29615 (US); OSTROUT, Nathan Nicholas, Greenville, 29615 (US); HUNT, Mark Lawrence, Greenville, 29615 (US); PEMRICK, James Warren, Niskayuna, 12309 (US); SIMPSON, Stanley Frank, Greenville, 29615 (US)
(74) Representative: Freigutpartners IP Law Firm

(57) **Abstract**

A component (202) includes a dense base region (204), a dense replacement region (206) and an additively manufactured (AM) porous region (200) between the dense base region (204) and the dense replacement region (206). The porous region (200) has a porosity between 2% to 50% open space volume to total volume of the AM porous region (200). The porous region (200) can be printed onto the base region (204) or the replacement region (206). A braze material (310) couples the base region (204), the porous region (200)) and the replacement region (206) together, and infiltrates into the porous region (200) based at least on a characteristic of the porosity. The porous region (200) reduces stress at a joint (370, 372)) between the dense regions (204, 206) and can be customized to create different physical characteristic(s) than just those of the base and replacement regions (204, 206).

## Description

### TECHNICAL FIELD

The disclosure relates generally to component repair, and more specifically, to repairing a component using a metal porous region printed onto a replacement region for, or a base region of, the component.

### BACKGROUND

Industrial components occasionally require repair. For example, hot gas path components that are used in turbomachines to direct a working fluid to create energy may require repair. Hot gas path components can take a variety of forms, such as turbine rotating blades or stationary vanes, that include airfoils that direct a working fluid to create energy. Rotating blades are coupled to and act to turn a turbine rotor, and stationary vanes are coupled to a casing of the turbomachine to direct the working fluid towards the rotating blades.

Additive manufacturing such as direct metal laser melting (DMLM) or selective laser melting (SLM) has emerged as a reliable manufacturing method for making industrial components. The advent of additive manufacturing techniques has also provided the ability to replace sections of components such as part of a leading or trailing edge of a turbomachine nozzle. For example, a portion of a leading edge of a turbomachine nozzle may be removed, leaving a cutout in the nozzle, and a new section (referred to herein as a "porous region") may be coupled in the cutout. The porous region is additively manufactured to have a shape that at least generally matches that of the cutout. The porous region can replace a section of a used turbomachine nozzle or be added as part of a new turbomachine nozzle.

However, replacement porous regions are made with the same materials and exterior structure as the removed portion of the component. Consequently, the replacement porous regions suffer from some of the same drawbacks as the original component and/or cutout with no improvement to general performance characteristics such as porous region strength, oxidation resistance, cycle fatigue, stress/strain resistance, ductility, wear resistance, thermal or electrical conductivity, and/or decreased mass. A single braze material is used to couple the replacement porous region to the component, which prevents improving the general performance characteristics listed above and additional performance characteristics related to the joint, such as increasing joint adhesive bond strength and reliability, and decreasing required post-braze machining/blending. Using porous regions that are materially identical to the removed cutouts also does not allow reduction in the high material cost for the replacement porous regions and may result in higher stresses at joints between replacement regions and the rest of the component.

### BRIEF DESCRIPTION

All aspects, examples and features mentioned below can be combined in any technically possible way.

An aspect of the disclosure provides a component, comprising: a dense first region; a dense second region; an additively manufactured (AM) porous region between the dense first region and the dense second region, the AM porous region having a porosity between 2% to 50% open space volume to total volume of the AM porous region; and a braze material coupling the dense first region, the AM porous region and the dense second region together, the braze material infiltrated into the AM porous region based at least on a characteristic of the porosity.

Another aspect of the disclosure includes any of the preceding aspects, and the porosity of the AM porous region varies along at least one of a length, a width, and a thickness thereof between the dense first region and the dense second region.

Another aspect of the disclosure includes any of the preceding aspects, and the porosity is between 10% to 40% open space volume to total volume of the AM porous region.

Another aspect of the disclosure includes any of the preceding aspects, and the AM porous region includes a cooling passage therein.

Another aspect of the disclosure includes any of the preceding aspects, and the dense first region and the dense second region are solid material.

Another aspect of the disclosure includes a method of repairing a component, the method comprising: removing a to-be-replaced region from a dense base region of the component leaving a first surface on the dense base region; additively manufacturing a porous region on one of the first surface of the dense base region and a second surface of a dense replacement region, the porous region having a porosity between 2% to 50% open space volume to total volume of the porous region; positioning the dense replacement region and the dense base region together with the porous region therebetween; and infiltrating the porous region with a braze material to couple the dense base region, the dense replacement region, and the porous region together.

Another aspect of the disclosure includes any of the preceding aspects, and the additive manufacturing includes forming the porous region on the first surface of the dense base region, and the positioning includes positioning the dense replacement region on the porous region.

Another aspect of the disclosure includes any of the preceding aspects, and the additive manufacturing includes forming the porosity higher in a first location at or near a third surface of the porous region contacting the dense replacement region than at a second location in the porous region closer to the first surface of the dense base region, wherein the infiltrating includes infiltrating more braze material into the porous region at the first location than at the second location.

Another aspect of the disclosure includes any of the preceding aspects, and the additive manufacturing includes forming the porous region with a first member configured to lockingly engage with a second member of the dense replacement region, wherein the positioning includes lockingly engaging the porous region and the dense replacement region together with the first and second members.

Another aspect of the disclosure includes any of the preceding aspects, and the additive manufacturing includes forming the porous region on the second surface of the dense replacement region, and the positioning includes positioning the porous region on the first surface of the dense base region.

Another aspect of the disclosure includes any of the preceding aspects, and the additive manufacturing includes forming the porosity higher in a first location at or near a third surface of the porous region contacting the first surface of the dense base region than at a second location in the porous region closer to the second surface of the dense replacement region, wherein the infiltrating includes infiltrating more braze material into the porous region at the first location than at the second location.

Another aspect of the disclosure includes any of the preceding aspects, and the additive manufacturing includes forming the porous region with a first member configured to lockingly engage with a second member of the dense base region, wherein the positioning includes lockingly engaging the porous region and the dense base region together with the first and second members.

Another aspect of the disclosure includes any of the preceding aspects, and the porous region and the dense replacement region collectively have a shape and dimensions of the to-be-replaced region.

Another aspect of the disclosure includes any of the preceding aspects, and the porosity of the porous region varies along at least one of a length, a width, and a thickness thereof between the dense replacement region and the dense base region.

Another aspect of the disclosure includes any of the preceding aspects, and the dense base region and the dense replacement region are solid material.

Another aspect of the disclosure includes any of the preceding aspects, and the additive manufacturing includes forming a cooling passage in the porous region.

Another aspect of the disclosure includes any of the preceding aspects, and the infiltrating includes using vacuum brazing, induction brazing, or inert gas atmosphere heating.

Another aspect of the disclosure includes any of the preceding aspects, and the additively manufacturing a porous region includes using a system having one or more melting beam sources to fuse together the layers of the metal powder, and further comprising adjusting a parameter of the system to control the porosity of the porous region.

Another aspect of the disclosure includes any of the preceding aspects, and the adjusting a parameter step comprises at least one of: adjusting an amount of overlap of a melting area of the one or more melting beam sources; adjusting scanning speed; and adjusting at least one of melting beam spot size, focus, or power.

Another aspect of the disclosure includes a method of repairing a component, the method comprising: removing a to-be-replaced region from a dense base region of the component leaving a first surface on the dense base region; additively manufacturing a porous region on the first surface of the dense base region and a dense replacement region on the porous region, the porous region having a porosity between 2% to 50% open space volume to total volume of the porous region; and infiltrating the porous region with a braze material to fix the dense base region, the dense replacement region and the porous region together.

Another aspect of the disclosure includes any of the preceding aspects, and the additive manufacturing includes forming the porosity higher in at least one of: a first section of the porous region closest to the dense replacement region and a second section of the porous region closest to the dense base region than at a third section in the porous region between the first section and the second section, wherein the infiltrating includes infiltrating more braze material into the at least one of the first section and the second section than the third section of the porous region.

Another aspect of the disclosure includes any of the preceding aspects, and the porous region and the dense replacement region collectively have a shape and dimensions to replace the to-be-replaced region.

Another aspect of the disclosure includes any of the preceding aspects, and the porosity of the porous region varies along at least one of a length, a width, and a thickness thereof between the dense replacement region and the dense base region.

Another aspect of the disclosure includes any of the preceding aspects, and the dense base region and the dense replacement region are solid material.

Another aspect of the disclosure includes any of the preceding aspects, and the additive manufacturing includes forming a cooling passage in the porous region.

Another aspect of the disclosure includes any of the preceding aspects, and the infiltrating includes using vacuum brazing, induction brazing, or inert gas atmosphere heating.

Two or more aspects described in this disclosure, including those described in this summary section, may be combined to form implementations not specifically described herein. That is, all embodiments described herein can be combined with each other.

The details of one or more implementations are set forth in the accompanying drawings and the description below. Other features, objects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic view of an illustrative industrial machine in the form of a gas turbine system and including a component according to embodiments of the disclosure;
FIG. 2 shows a cross-sectional view of an illustrative gas turbine assembly that may be used with the gas turbine system in FIG. 1 and including a component according to embodiments of the disclosure;
FIG. 3 shows a perspective view of a component in the form of a turbine rotating blade including a metal porous region according to embodiments of the disclosure;
FIG. 4 shows a perspective view of a component in the form of a turbine nozzle including a metal porous region according to embodiments of the disclosure;
FIG. 5 shows a schematic block diagram of an illustrative additive manufacturing system for additively manufacturing a metal porous region according to embodiments of the disclosure;
FIGS. 6A-D show top-down views of sample metal porous regions having porous regions having different porosities according to embodiments of the disclosure;
FIGS. 7A-B show side view of removing a to-be-replaced region from a component leaving according to various embodiments of the disclosure;
FIGS. 8A-E show side views of methods according to various embodiments of the disclosure;
FIGS. 9A-F show side views of methods according to various embodiments of the disclosure;
FIGS. 10A-E show side views of methods according to various embodiments of the disclosure; and
FIGS. 11A-B show a top-down and a schematic side view, respectively, of a metal porous region according to embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the current disclosure, it will become necessary to select certain terminology when referring to and describing relevant machine components within the illustrative application of a turbomachine. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as the working fluid through the turbomachine or, for example, the flow of air through the combustor or coolant through one of the turbomachine's component systems. The term "downstream" corresponds to the direction of flow of the fluid, and the term "upstream" refers to the direction opposite to the flow. The terms "forward" and "aft," without any further specificity, refer to directions, with "forward" referring to the front or compressor end of the turbomachine, and "aft" referring to the rearward or turbine end of the turbomachine.

In addition, several descriptive terms may be used regularly herein, as described below. The terms "first," "second," and "third," may be used interchangeably to distinguish one component from another and are not intended to signify location or importance of the individual components.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event may or may not occur or that the subsequently described feature may or may not be present and that the description includes instances where the event occurs, or the feature is present and instances where the event does not occur or the feature is not present.

Where an element or layer is referred to as being "on," "engaged to," "connected to," "coupled to," or "mounted to" another element or layer, it may be directly on, engaged, connected, coupled, or mounted to the other element or layer, or intervening elements or layers may be present. In contrast, when an element is referred to as being "directly on," "directly engaged to," "directly connected to," or "directly coupled to" another element or layer, there are no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items. The verb forms of "couple" and "mount" may be used interchangeably herein.

As indicated above, the disclosure provides a component including a dense base region, a dense replacement region and an additively manufactured (AM) porous region between the dense base region and the dense replacement region. The porous region has a porosity between 2% to 50% open space volume to total volume of the porous region. The porous region can be printed onto the base region or the replacement region. A braze material couples the base region, the porous region and the replacement region together, and infiltrates into the porous region based at least on a characteristic of the porosity. A method of repairing a component may include removing a to-be-replaced region from a dense base region of the component leaving a first surface on the dense base region, and additively manufacturing the porous region on one of the first surface of the base region and a second surface of a replacement region. After positioning the base and replacement regions together, a braze material infiltrates the porous region to couple the base region, the replacement region, and the porous region together. In other embodiments, the porous region and the replacement region may be sequentially printed on the base region, and then the porous region may be infiltrated with the braze material. The one or more porosities of the porous region are configured to direct the flow of one or more braze materials in different ways to create different physical characteristics than previously possible, e.g., by directing more braze material where needed, directing braze material into special shapes and/or allowing use of more than one braze material. The customized porous region does not suffer the same drawbacks as the original component and/or cutout and can be customized (with the braze material(s)) to, for example, change: joint adhesive bond strength, stress/strain resistance, ductility, wear resistance, oxidation resistance, cycle fatigue, thermal conductivity, electrical conductivity, surface roughness, hardness, and mass. The repair is stronger than traditional narrow gap brazing processes, does not require certain post-repair finishing, yet provides improved physical characteristics compared to current techniques, such as pre-sintered preforms (PSPs). One or more braze materials can be used to couple the replacement region to the base region to also improve performance characteristics related to the j oint, such as j oint adhesive bond strength and reliability, and reducing required post-brazing machining/blending. Notably, the porous region reduces stress at the joint between the base and replacement regions. Use of the porous region can also reduce material costs, for example, by using less of more expensive materials in the joint.

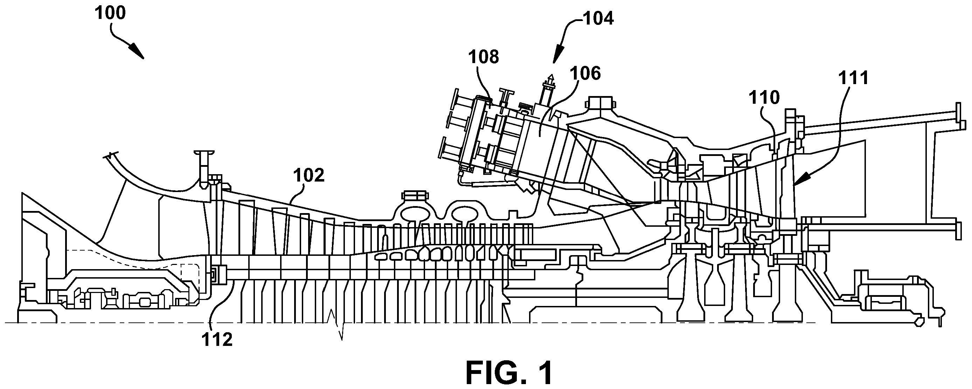

FIG. 1 shows a schematic illustration of an illustrative industrial machine, which may include a component according to teachings of the disclosure. In the example, the machine includes a turbomachine 100 in the form of a combustion or gas turbine (GT) system. Turbomachine 100 includes a compressor 102 and a combustor 104. Combustor 104 includes a combustion region 106 and a fuel nozzle assembly 108. Turbomachine 100 also includes a turbine assembly 110 and a common compressor/turbine shaft or rotor 112. In one embodiment, turbomachine 100 is a 7HA.03 engine, commercially available from GE Vernova. The present disclosure is not limited to any one particular GT system and may be implemented in connection with other engines including, for example, the other HA, F, B, LM, GT, TM and E-class engine models of GE Vernova, and engine models of other companies. Furthermore, the present disclosure is not limited to any particular turbomachine, and may be applicable to, for example, steam turbines, jet engines, compressors, turbofans, etc. Moreover, the present disclosure is not limited to any particular turbomachine component and may be applicable to any industrial component that employs porous regions during manufacture or repair.

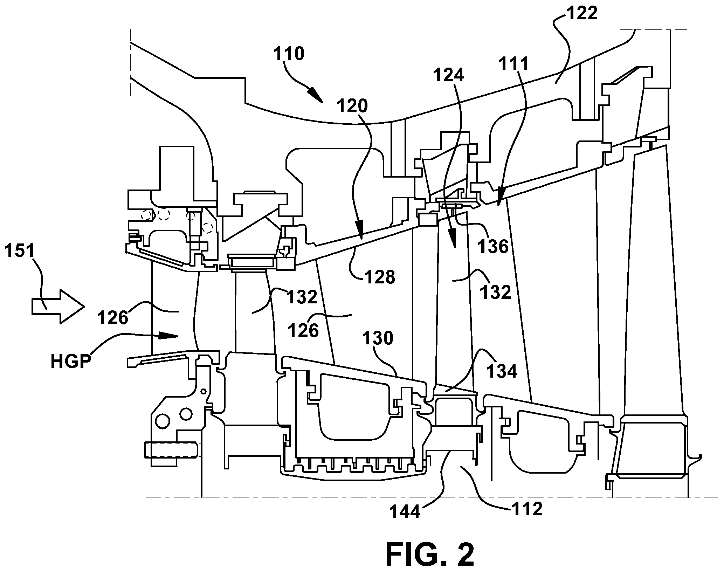

In operation, air flows through compressor 102 and compressed air is supplied to combustor 104. Specifically, the compressed air is supplied to fuel nozzle assembly 108 that is integral to combustor 104. Assembly 108 is in flow communication with combustion region 106. Fuel nozzle assembly 108 is also in flow communication with a fuel source (not shown in FIG. 2) and channels fuel and air to combustion region 106. Combustor 104 ignites and combusts fuel. Combustor 104 is in flow communication with turbine assembly 110 for which gas stream thermal energy is converted to mechanical rotational energy. Turbine assembly 110 includes a turbine 111 that rotatably couples to and drives rotor 112. Compressor 102 also is rotatably coupled to rotor 112. In the illustrative embodiment, there are a plurality of combustors and fuel nozzle assemblies 108.

FIG. 2 shows a cross-sectional view of an illustrative turbine assembly 110 of turbomachine 100 (FIG. 1) that may be used with the gas turbine system in FIG. 1. Turbine 111 of turbine assembly 110 includes a row of nozzle or vanes 120 coupled to a stationary casing 122 of turbomachine 100 and axially adjacent a row 124 of rotating blades 132. A stationary vane or nozzle 126 may be held in turbine assembly 110 by a radially outer platform 128 and a radially inner platform 130. Row 124 of blades in turbine assembly 110 includes rotating blades 132 coupled to rotor 112 and rotating with the rotor. Rotating blades 132 may include a radially inward platform 148 (at root of blade) coupled to rotor 112 and, optionally, a radially outward tip shroud 136 (at tip of blade). As used herein, the term "component" may refer collectively to stationary nozzles 126, rotating blades 132 or any other structure in which metal coupons including porous region(s) according to the disclosure can be employed.

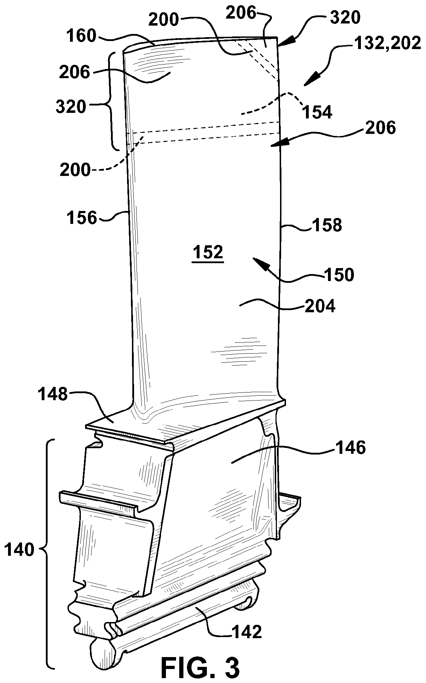

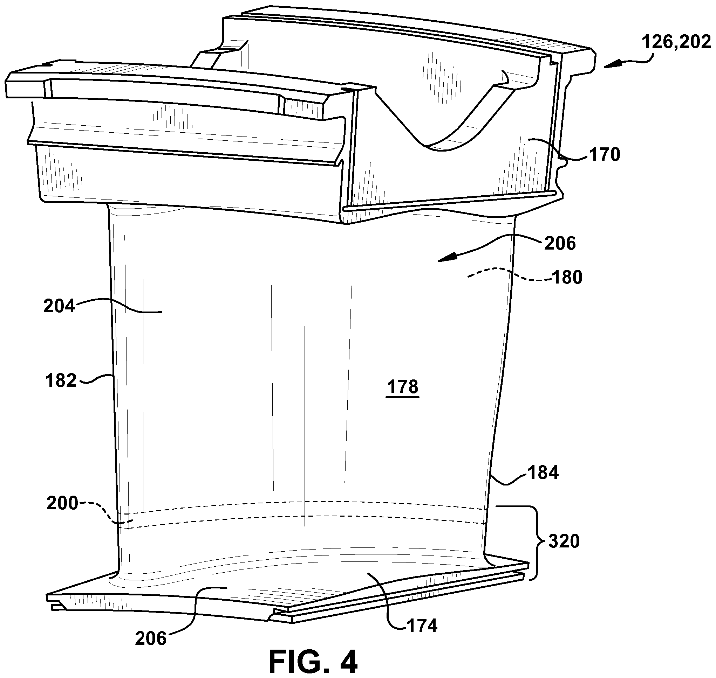

FIGS. 3 and 4 show illustrative components, such as hot gas path components of a turbomachine, in which teachings of the disclosure may be employed. FIG. 3 shows a perspective view of a turbine rotating blade 132 of the type in which embodiments of the present disclosure may be employed. Turbine rotating blade 132 includes a root 140 by which rotating blade 132 attaches to rotor 112 (FIG. 2). Root 140 may include a dovetail 142 configured for mounting in a corresponding dovetail slot in the perimeter of a rotor wheel 144 (FIG. 2) of rotor 112 (FIG. 2). Root 140 may further include a shank 146 that extends between dovetail 142 and a platform 148, which is disposed at the junction of an airfoil 150 and root 140 and defines a portion of the inboard boundary of the flow path through turbine assembly 110. It will be appreciated that airfoil 150 is the active component of rotating blade 132 that intercepts the flow of working fluid 151 (FIG. 2), i.e., hot combustion gases, and induces the rotor disc to rotate. It will be seen that airfoil 150 of rotating blade 132 includes a concave pressure side (PS) outer wall 152 and a circumferentially or laterally opposite convex suction side (SS) outer wall 154 extending axially between opposite leading and trailing edges 156, 158 respectively. Side outer walls 152 and 154 also extend in the radial direction from platform 148 to an outboard tip 160, the latter of which may or may not include a tip shroud 136 (FIG. 2).

FIG. 4 shows a perspective view of a stationary nozzle 126 of the type in which embodiments of the present disclosure may be employed. Stationary nozzle 126 includes an outer platform 170 by which stationary nozzle 126 attaches to stationary casing 122 (FIG. 2) of the turbomachine. Outer platform 170 may include any now known or later developed mounting configuration for mounting in a corresponding mount in the casing. Stationary nozzle 126 may further include an inner platform 174 for positioning between adjacent turbine rotor blades 132 (FIG. 3) platforms 148 (FIG. 3). Platform 170, 174 define respective portions of the outboard and inboard boundary of the flow path through turbine assembly 110. It will be appreciated that airfoil 176 is the active component of stationary nozzle 126 that intercepts the flow of working fluid and directs it towards turbine rotor blades 132 (FIG. 3). It will be seen that airfoil 176 of stationary nozzle 126 includes a concave pressure side (PS) outer wall 178 and a circumferentially or laterally opposite convex suction side (SS) outer wall 180 extending axially between opposite leading and trailing edges 182, 184 respectively. Side outer walls 178 and 180 also extend in the radial direction from platform 170 to platform 174.

It is understood that blade 132 or nozzle 126 may include internal cooling structures including sources of coolant such as passages, conduits and other structure that deliver coolant to a surface thereof for film cooling. Coolant may include, for example, air from compressor 102.

Embodiments of the disclosure described herein may include aspects applicable to either stationary nozzle 126, turbine rotating blade 132 and/or any other industrial component that employs porous regions. The component can be, for example, stationary nozzles 126, rotating blades 132 or any other industrial component that uses replacement regions. FIGS. 3 and 4 also show illustrative an additively manufactured (AM) porous region 200 (hereafter "porous region 200," "porous region(s) 200" or "AM porous region(s) 200" for brevity) in a component 202. Porous region 200 is shown in dashed lines because, as will be explained, it will be infiltrated with a braze material 310 (not shown in FIGS. 3-4) to couple regions of component 202 together. Porous region 200 may be between a dense base region 204, i.e., the region remaining after a to-be-replaced region is removed, and a dense replacement region 206 of component 202, i.e., the region coupled to base region 204 by porous region 200 and braze material. In the examples shown, replacement region 206 includes at least part of a tip 160 of rotating blade 132 or a corner of tip 160 in FIG. 3, or at least part of platform 174 of stationary nozzle 126 in FIG. 4. It is emphasized, however, that porous regions 200 can be employed to couple any replacement region 206 to base region 204 of component 202. Replacement region 206 can be any part of component 202.

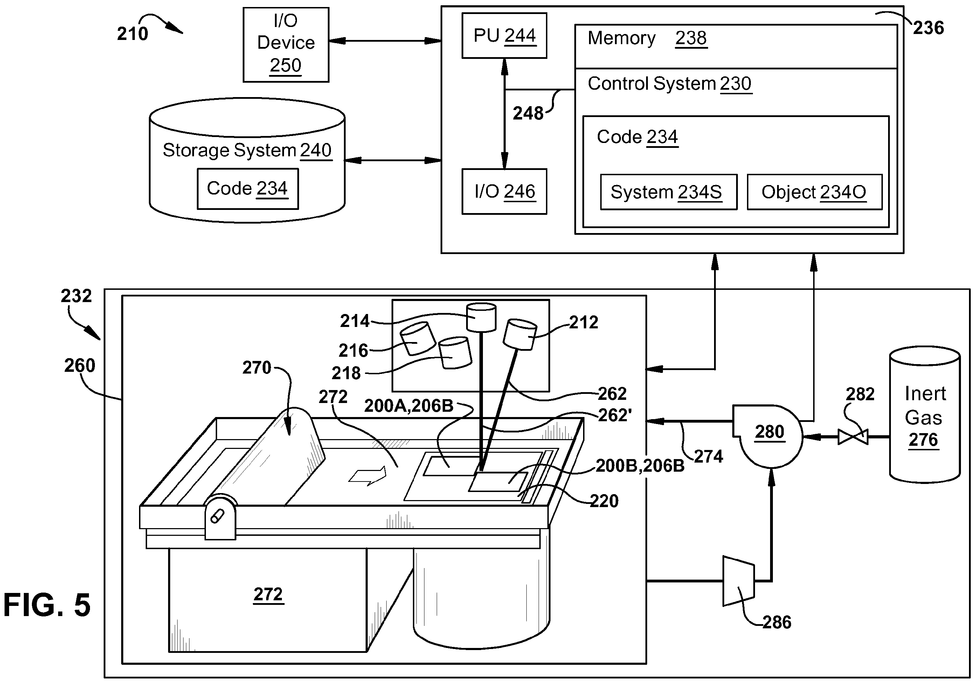

Additively manufactured porous regions 200 may be additively manufactured using any now known or later developed technique capable of forming porous metal on another part. Further, additively manufactured porous region 200 and dense replacement region 206 may be additively manufactured using any now known or later developed technique capable of forming porous metal on another part and dense (e.g., solid) metal on porous region 200. FIG. 5 shows a schematic/block view of an illustrative computerized metal powder additive manufacturing system 210 (hereinafter `AM system 210') for generating: porous region 200 or multiple porous regions 200A, 200B (multiples shown), and/or dense replacement region 206 or multiple dense replacement regions 206A, 206B (multiples shown). Only a single layer of either region 200, 206 is shown. The teachings of the disclosures will be described relative to building porous region 200 or replacement region 206 using multiple melting beam sources 212, 214, 216, 218, but it is emphasized and will be readily recognized that the teachings of the disclosure are equally applicable to build multiple porous regions 200A, 200B on dense base region 204 (in powder bed in FIG. 5) and/or build multiple replacement regions 206A, 206B on porous region 200 (in powder bed in FIG. 5), using any number of melting beam sources. In this example, AM system 210 is arranged for direct metal laser melting (DMLM). It is understood that the general teachings of the disclosure are equally applicable to other forms of metal powder additive manufacturing such as but not limited to other forms of metal powder applications such as selective laser melting (SLM), or metal cladding techniques (e.g., melting of metal source onto surface of dense base region 204). Porous regions 200A, 200B or replacement regions 206A, 206B are illustrated as rectangular elements; however, it is understood that the additive manufacturing process can be readily adapted to manufacture any shaped porous or dense regions, a large variety of different porosity regions or sub-regions within a given porous region or a large variety of different dense replacement regions or sub-regions within a given replacement region, and a large number of dense or porous regions on build platform 220.

AM system 210 generally includes an additive manufacturing control system 230 ("control system") and an AM printer 232. As will be described, control system 230 executes set of computer-executable instructions or code 234 to generate dense or porous region(s) using multiple melting beam sources 212, 214, 216, 218. In the example shown, four melting beam sources may include four lasers. However, the teachings of the disclosures are applicable to any melting beam source, e.g., an electron beam, laser, etc. Control system 230 is shown implemented on computer 236 as computer program code. To this extent, computer 236 is shown including a memory 238 and/or storage system 240, a processor unit (PU) 244, an input/output (I/O) interface 246, and a bus 248. Further, computer 236 is shown in communication with an external I/O device/resource 250. In general, processor unit (PU) 244 executes computer program code 234 that is stored in memory 238 and/or storage system 240. While executing computer program code 234, processor unit (PU) 244 can read and/or write data to/from memory 238, storage system 240, I/O device 250 and/or AM printer 232. Bus 248 provides a communication link between each of the components in computer 236, and I/O device 250 can comprise any device that enables a user to interact with computer 236 (e.g., keyboard, pointing device, display, etc.). Computer 236 is only representative of various possible combinations of hardware and software. For example, processor unit (PU) 244 may comprise a single processing unit or be distributed across one or more processing units in one or more locations, e.g., on a client and server. Similarly, memory 238 and/or storage system 240 may reside at one or more physical locations. Memory 238 and/or storage system 240 can comprise any combination of various types of non-transitory computer readable storage medium including magnetic media, optical media, random access memory (RAM), read only memory (ROM), etc. Computer 236 can comprise any type of computing device such as an industrial controller, a network server, a desktop computer, a laptop, a handheld device, etc.

As noted, AM system 210 and, in particular control system 230, executes code 234 to generate porous region(s) 200 or dense replacement region(s) 206. Code 234 can include, among other things, a set of computer-executable instructions 234S (herein also referred to as `code 234S') for operating AM printer 232, and a set of computer-executable instructions 234O (herein also referred to as 'code 234O') defining porous region(s) 200 and/or replacement region(s) 206 to be physically generated by AM printer 232. As described herein, additive manufacturing processes begin with a non-transitory computer readable storage medium (e.g., memory 238, storage system 240, etc.) storing code 234. Set of computer-executable instructions 234S for operating AM printer 232 may include any now known or later developed software code capable of operating AM printer 232.

Set of computer-executable instructions 234O defining porous region(s) 200 and/or replacement region(s) 206 may include a precisely defined 3D model of a porous region and can be generated from any of a large variety of well-known computer aided design (CAD) software systems such as AutoCAD^{®}, TurboCAD^{®}, DesignCAD 3D Max, etc. In this regard, code 234O can include any now known or later developed file format. Furthermore, code 234O representative of porous region(s) 200 and/or replacement region(s) 206 may be translated between different formats. For example, code 234O may include Standard Tessellation Language (STL) files which was created for stereolithography CAD programs of 3D Systems, or an additive manufacturing file (AMF), which is an American Society of Mechanical Engineers (ASME) standard that is an extensible markup-language (XML) based format designed to allow any CAD software to describe the shape and composition of any three-dimensional object to be fabricated on any AM printer. Code 234O representative of porous region(s) 200 and/or replacement region(s) 206 may also be converted into a set of data signals and transmitted, received as a set of data signals and converted to code, stored, etc., as necessary. Code 234O may be configured according to embodiments of the disclosure to allow for formation of border and internal sections in overlapping field regions, as will be described. In any event, code 234O may be an input to AM system 210 and may come from a part designer, an intellectual property (IP) provider, a design company, the operator or owner of AM system 210, or from other sources. In any event, control system 230 executes code 234S and 234O, dividing porous region(s) 200 and/or replacement region(s) 206 into a series of thin slices that assembles using AM printer 232 in successive layers of material.

AM printer 232 may include a processing chamber 260 that is sealed to provide a controlled atmosphere for porous region(s) 200 printing. A build platform 220, upon which porous region(s) 200 and/or replacement region(s) 206 can be built, is positioned within processing chamber 260. A number of melting beam sources 212, 214, 216, 218 are configured to melt layers of metal powder on build platform 220 to generate porous region(s) 200 and/or replacement region(s) 206. While four melting beam sources 212, 214, 216, 218 are illustrated, it is emphasized that the teachings of the disclosure are applicable to a system employing any number of sources, e.g., 1, 2, 3, or 5 or more. As understood in the field, each melting beam source 212, 214, 216, 218 may have a field including a non-overlapping field region, respectively, in which it can exclusively melt metal powder, and may include at least one overlapping field region in which two or more sources can melt metal powder. In this regard, each melting beam source 212, 214, 216, 218 may generate a melting beam, respectively, that fuses particles for each slice, as defined by code 234O. For example, in FIG. 5, melting beam source 212 is shown creating a layer of porous region(s) 200 porous region(s) 200 or replacement region(s) 206 using melting beam 262 in one region, while melting beam source 216 is shown creating a layer of porous region(s) 200 or replacement region(s) 206 using melting beam 262' in another region. Each melting beam source 212, 214, 216, 218 is calibrated in any now known or later developed manner. That is, each melting beam source 212, 214, 216, 218 has had its laser or electron beam's anticipated position relative to build platform 220 correlated with its actual position in order to provide an individual position correction (not shown) to ensure its individual accuracy. In one embodiment, each of plurality melting beam sources 212, 214, 216, 218 may create melting beams, e.g., 262, 262', having the same cross-sectional dimensions (e.g., shape and size in operation), power and scan speed.

Continuing with FIG. 5, an applicator (or re-coater blade) 270 may create a thin layer of raw material 272 spread out as the blank canvas from which each successive slice of porous region 200 or replacement region 206 will be created. Various parts of AM printer 232 may move to accommodate the addition of each new layer, e.g., a build platform 220 may lower and/or chamber 260 and/or applicator 270 may rise after each layer. The process may use different raw materials in the form of fine-grain metal powder, a stock of which may be held in a chamber 260 accessible by applicator 270. In the instant case, porous region(s) 200 or replacement region(s) 206 may be made of a metal which may include a pure metal or an alloy. In one example, the metal may include practically any non-reactive metal powder, i.e., non-explosive or non-conductive powder, such as but not limited to: a cobalt chromium molybdenum (CoCrMo) alloy, stainless steel, an austenite nickel-chromium based alloy such as a nickel-chromium-molybdenum-niobium alloy (NiCrMoNb) (e.g., Inconel 625 or Inconel 718), a nickel-chromium-iron-molybdenum alloy (NiCrFeMo) (e.g., Hastelloy^{®} X available from Haynes International, Inc.), or a nickel-chromium-cobalt-molybdenum alloy (NiCrCoMo) (e.g., Haynes 282 available from Haynes International, Inc.). Other possibilities include, for example, René 108, CM 247 LC, Mar M 247 and any precipitation harden-able (PH) nickel alloy. Base region 204 may be made of the same or different material, and may be made by additive manufacturing or another process, such as casting.

Processing chamber 260 is filled with an inert gas such as argon or nitrogen and controlled to minimize or eliminate oxygen. Control system 230 is configured to control a flow of a gas mixture 274 within processing chamber 260 from a source of inert gas 276. In this case, control system 230 may control a pump 280, and/or a flow valve system 282 for inert gas to control the content of gas mixture 274. Flow valve system 282 may include one or more computer controllable valves, flow sensors, temperature sensors, pressure sensors, etc., capable of precisely controlling flow of the particular gas. Pump 280 may be provided with or without valve system 282. Where pump 280 is omitted, inert gas may simply enter a conduit or manifold prior to introduction to processing chamber 260. Source of inert gas 276 may take the form of any conventional source for the material contained therein, e.g., a tank, reservoir or other source. Any sensors (not shown) required to measure gas mixture 274 may be provided. Gas mixture 274 may be filtered using a filter 286 in a conventional manner.

In operation, build platform 220 with metal powder thereon is provided within processing chamber 260, and control system 230 controls flow of gas mixture 274 within processing chamber 260 from source of inert gas 276. As will be described herein, base region 204 or replacement region 206 is positioned within metal powder with a surface thereof exposed for building porous region 200 thereon. Control system 230 also controls AM printer 232, and in particular, applicator 270 and melting beam sources 212, 214, 216, 218 to sequentially melt layers of metal powder on build platform 220 to generate porous region(s) 200 or replacement region(s) 206, according to embodiments of the disclosure.

While a particular AM system 210 has been described herein, it is emphasized that the teachings of the disclosure are not limited to any particular additive manufacturing system or method. Also, while the teachings of the disclosure relate to an additively manufactured porous region(s) 200 and/or replacement region(s) 206, it will be recognized that component 202 (initial component) may be manufactured in any now known or later developed manner such as additive manufacturing (perhaps similar to that described for porous region(s) 200), casting, or other methodology. Base region 204 and replacement region 206 for component 202 may include any of the material(s) listed herein for porous region(s) 200.

"Porosity," as used herein, is a ratio of open space volume to total volume of the stated structure, e.g., porous region 200. Typically, in this regard, porosity is stated as a percentage of volume of open space to overall or total volume of the stated structure. The open space is empty areas in a solid material and may be referred to herein as "pores" 201 and may include interconnecting passages in the material of the stated structure. A "porous region" is thus less than 100% solid and includes open spaces in the form of pores 201 and/or interconnecting passages. As used herein, a three-dimensional boundary of a porous region or sub-region for purpose of identifying a "total volume" thereof can be identified by where a change in porosity of greater than 2% relative to an adjacent region or sub-region occurs within porous region 200 and/or an edge of porous region 200 exists. "Open space volume" is collectively a three-dimensional space that is empty, i.e., a void, gap, empty space and/or not filled with material, within a region or sub-region. As used herein, "different porosities" or "differences in porosity," generally means any variety of characteristics such as: percentage of open space volume to total volume, a number of pores 201 in a given volume, the volume (i.e., size) of pores 201, shape of pores 201, and variations in connecting passages between pores 201 that may not be recognized as actual discrete pores (referred to herein as "pore connecting passages"). As one non-limiting example only, pore size can be in a range of, for example, 1.07×10⁻⁶ to 8.58×10⁻³ cubic millimeters (6.54×10⁻¹¹ to 5.24×10⁻⁷ cubic inches), or as another non-limiting example, the pore diameter can be in a range of 0.0127 mm to 0.254 mm (0.0005 inches to 0.01 inches). In the drawings, the different porous regions or sub-regions are typically shown as being continuous or in contact with one another, it is emphasized however that they can be isolated from one another in any manner, e.g., with solid areas therebetween. That is, a single metal coupon may include one or more isolated, non-contacting porous regions or sub-regions. Note, the terms "region" and/or "sub-region" may be used interchangeably to denote changes in porosity. With differences in, for example, pore shape or pore connecting passages, it will be recognized that differences in porosity may not be exclusively based on percentage of open space volume to total volume. However, where differences in porosities are compared in terms of degree, e.g., higher or lower, the difference referenced is exclusively that of the volume characteristics, i.e., percentage of open space volume to total volume. "Dense" as used herein indicates the material has a very low porosity, e.g., 1% or below, and may be solid material, i.e., 0% porosity. Hence, dense material has a porosity of less than 1% and does not allow braze material to infiltrate it. Base region 204 of component 202 and replacement region 206 for component 202 are made of dense material and may be solid material. The materials for base region 204 or replacement region 206 can be any of the materials listed herein for porous region 200.

Porous metal coupon(s) 200 can be formed with different porous regions with different porosities (which may or may not include one or more porous sub-regions with different porosities) using AM system 210 as described herein, or any other metal additive manufacturing system or method capable of forming porous metals. In terms of AM system 210 operation, melting beam sources 212, 214, 216, 218 can be programmed to intermittently not sinter metal, leaving metal powder rather than solid material. This process may include overlapping laser field regions by different amounts and/or designing pores 302 into a build file, i.e., code 234O. Less overlap of each laser scan creates more porosity, and more lasers overlap between successive scans creates less porosity. Laser spot size, scanning speed, focus and power can also be controlled to adjust porosity. More particularly, the additively manufacturing includes using AM system 210 having one or more melting beam sources 212, 214, 216, 218 to fuse together the layers of the metal powder and adjusting a parameter of the system to control the porosity of the at least two porous regions. The adjusting a parameter may include at least one of: adjusting an amount of overlap of a melting area of the one or more melting beam 262, 262' (FIG. 5) (from sources 212, 214, 216, 218); adjusting system scanning speed; and adjusting at least one of melting beam spot size, focus, or power. When the un-melted metal powder is removed from metal coupon(s) 200, it leaves pores 302 with interconnecting passages between pores 302 and creating one or more porous region(s). In any event, the layered manufacture of porous region 200 can be controlled to create the desired porosity for any number, shape and/or size of porous regions within any desired layers.

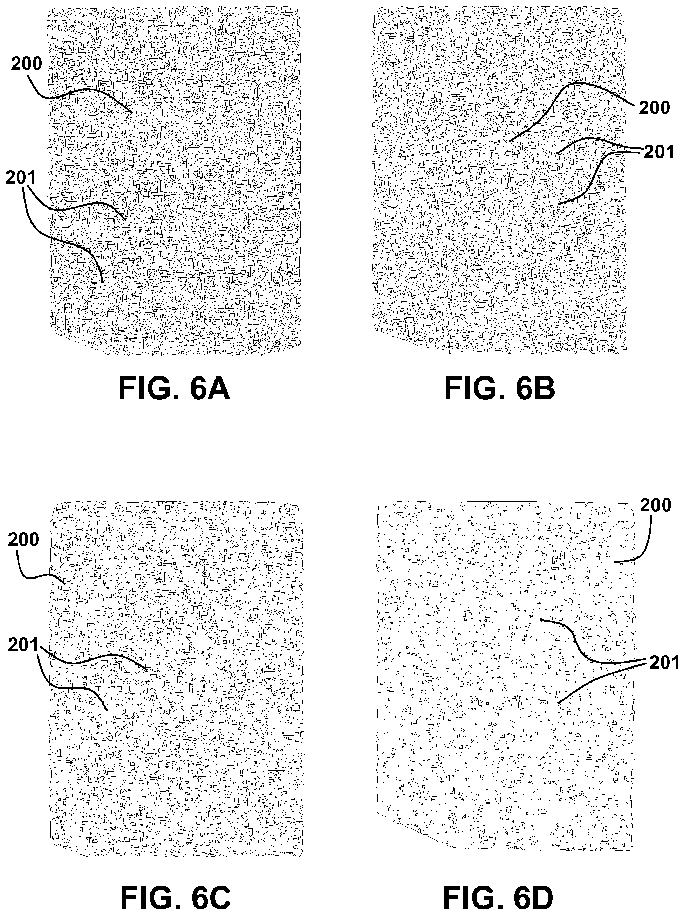

FIGS. 6A-D show top-down schematic views of sample metal coupons 200 having different porosities. Pores 302 are shown as darker open spaces in the drawings. FIG. 6A shows a sample porous region 200 having a first porosity of approximately 40% open space volume to total volume of the sample (with a generally low amount of open space and more or larger pores 302), FIG. 6B shows a sample porous region 200 having a first porosity of approximately 30% open space volume to total volume of sample, FIG. 6C shows a sample porous region 200 having a first porosity of approximately 20% open space volume to total volume of the sample, FIG. 6D shows a sample porous region 200 having a first porosity of approximately 10% open space volume to total volume of the sample (with a generally low amount of open space). Each porous region may have a porosity between 2% to 50% open space volume to total volume of the porous region, i.e., 2% to 50% open space with the other 50% to 98% solid. In other embodiments, each porosity may be between 10% to 40% open space volume to total volume of porous region 300, i.e., 10% to 40% open space with the other 60% to 90% solid. In other embodiments, porous region(s) can be provided in metal coupons 200 having a porosity in a range of less than 10%, in a range of less than 15%, in a range of less than 20%, in a range of less than 25%, in a range of less than 30%, in a range of less than 35%, in a range of less than 40%, in a range of less than 45%, in a range of 2% to 45%, in a range of 2% to 40%, in a range of 2% to 35%, in a range of 2% to 30%, in a range of 2% to 25%, in a range of 2% to 20%, in a range of 5% to 45%, in a range of 5% to 40%, in a range of 5% to 35%, in a range of 5% to 30%, in a range of 5% to 25%, in a range of 5% to 20%, in a range of 10% to 45%, in a range of 10% to 40%, in a range of 10% to 35%, in a range of 10% to 30%, in a range of 10% to 25%, in a range of 10% to 20%, in a range of 15% to 45%, in a range of 15% to 40%, in a range of 15% to 35%, in a range of 15% to 30%, in a range of 15% to 25%, in a range of 15% to 20%, in a range of 10% to 50%, in a range of 20% to 50%, in a range of 25% to 50%, in a range of 30% to 50%, in a range of 35% to 50%, or in a range of 40% to 50%. As will be described herein, other ranges of porosity are also possible.

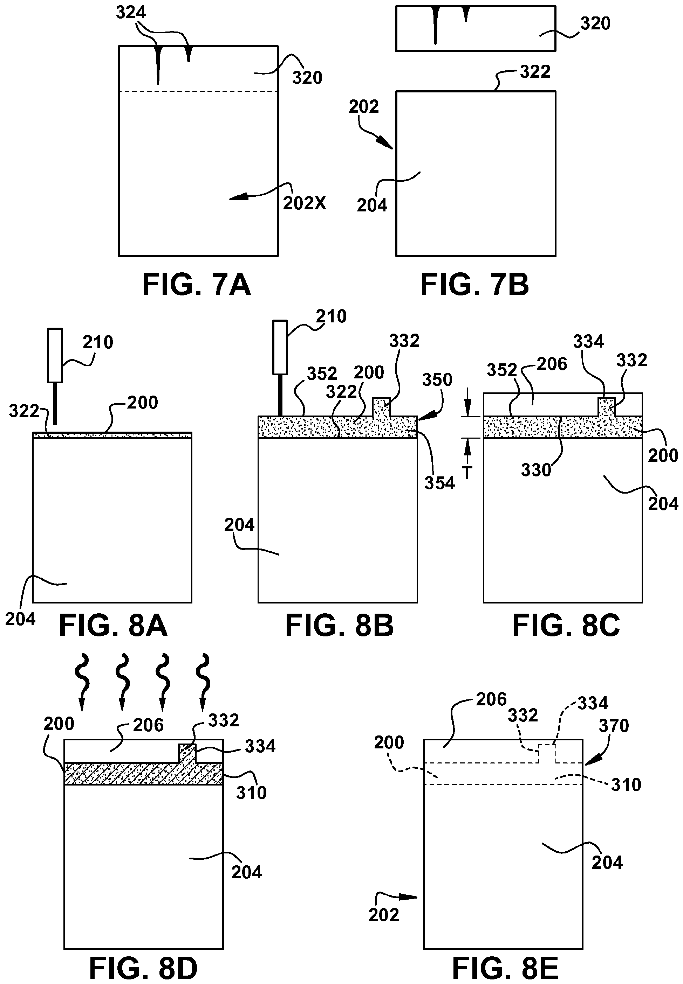

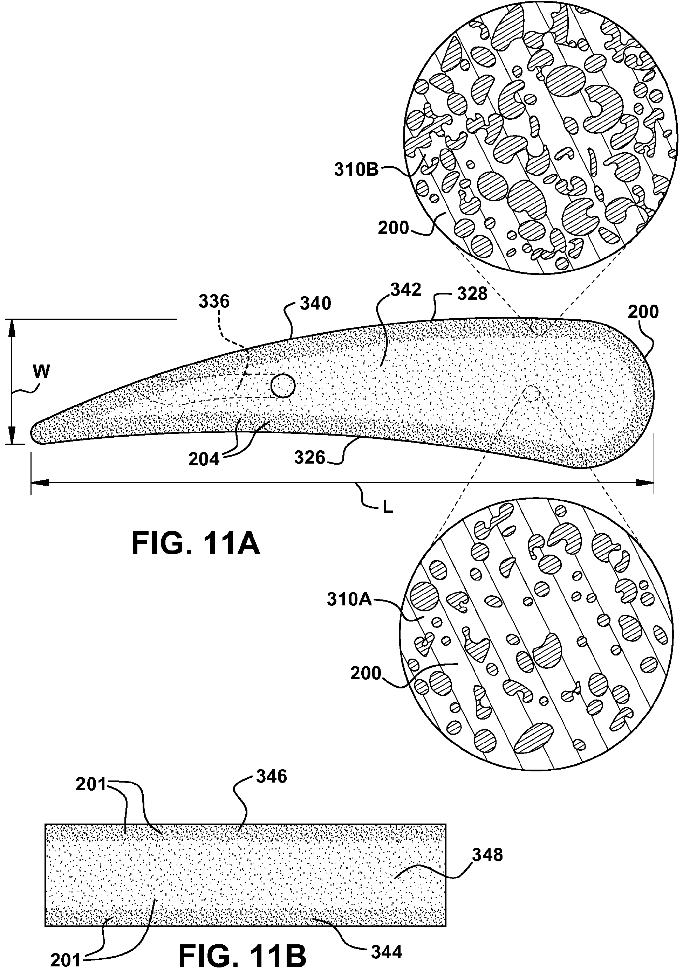

Referring to FIGS. 3, 4, 7A-B, 8A-E, 9A-F, 10A-E and 11A-B, embodiments of a method according to the disclosure will now be described. The method may include repairing a component 202. FIG. 7A-B, 8A-E, 9A-F and 10A-E show side views of various methods according to embodiments of the disclosure. FIG. 11A shows a top-down view and FIG. 11B shows a side view, respectively, of illustrative porous regions 200, according to embodiments of the disclosure.

FIGS. 7A-B show removing a to-be-replaced region 320, i.e., a cutout, from a dense base region 204 of a component, i.e., an initial, to-be-repaired component 202X. The removal leaves a surface 322 on dense base region 204. For uniformity of repair, especially where a plurality of components 202X undergo a similar type of damage repair, all base regions 204 may be cut to the same length. Region 320 to be replaced may have any form, but typically includes some form of defect 324 to be corrected by replacing region 320 with a new or undamaged facsimile. In the examples shown in FIGS. 3-4, region 320 may include a damaged tip 160 of blade 132 or a damaged platform 174 of nozzle 126. Alternatively, as also shown in FIG. 3, region 320 can be a smaller portion, such as a corner of tip 160 of blade 132. Defect(s) 324 can take a large variety of forms such as but not limited to: worn surfaces, pitting, oxidation, cracks and/or deformation. Region 320 can be removed using any now known or later developed removal process appropriate for the material of component 202, i.e., base region 204. For example, region 320 can be removed by cutting, electric discharge machining, grinding, etc. Surface 322 of base region 204 is typically in a form so it can have porous region 200 easily additively manufactured, i.e., printed, thereon. In this regard, surface 322 may be, for example, planar so that it can be positioned in a powder bed in AM system 210 and porous region 200 (and perhaps a replacement region 206) can be printed thereon. In certain embodiments, surface 322 may also have a selected roughness for adhesion of porous region 200 thereto; however, this may not be necessary in all cases.

In an alternative embodiment, to-be-replaced region 320 may not exist and the teachings of the disclosure are applied to surface 322 of base region 204 to add a new region (similar to replacement region 206, described herein) thereto. For example, a new wear layer or region (not shown) may be added to base region 204 without removing any previously present region 320 thereof.

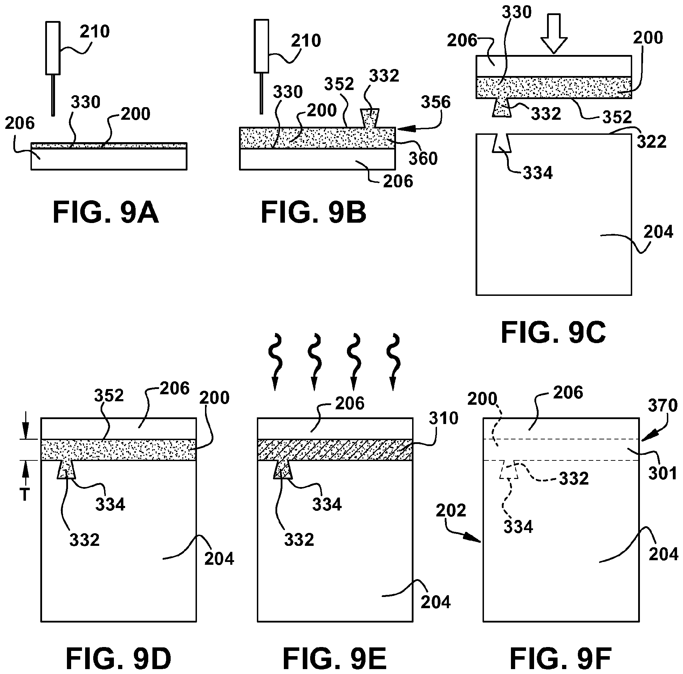

As shown in FIGS. 8A-B, embodiments of the disclosure may additively manufacture, i.e., form, porous region 200 on surface 322 of dense base region 204, perhaps after removal of to-be-replaced region 320, and subsequently an already formed, dense replacement region 206 is coupled to porous region 200. Alternatively, as shown in FIGS. 9A-B, embodiments of the disclosure may additively manufacture, i.e., form, porous region 200 on a surface 330 of (an already formed) dense replacement region 206 and then couple porous region 200 (with replacement region 206 thereon) to surface 322 of dense base region 204. Hence, porous region 200 may be additively manufactured on one of surface 322 of dense base region 204 (hereafter "base region 204" for brevity) and a surface 330 of dense replacement region 206 (hereafter "replacement region 206" for brevity). More particularly, FIGS. 8A-B show additively manufacturing porous region 200 on surface 322 of dense base region 204, and FIGS. 9A-B show additively manufacturing porous region 200 on surface 330 of replacement region 206. In any case, porous region 200 may have a porosity between 2% to 50% open space volume to total volume of the porous region. In another embodiment, porous region 200 may have a porosity between 10% to 40% open space volume to total volume of the porous region. Alternatively, porous region 200 may have any porosity previously described herein. As will be further described herein, porous region 200 may have any number of sub-regions having different porosities.

With further regard to FIGS. 8B-E and 9B-F, optional embodiments of the disclosure may additively manufacture porous region 200 with a first member 332 configured to lockingly engage with a second member 334 of either replacement region 206 or base region 204. In FIG. 8B, the additive manufacturing includes optionally forming porous region 200 with first member 332 configured to lockingly engage with, as shown in FIGS. 8C-E, second member 334 of replacement region 206. Here, replacement region 206 is formed with or modified to include second member(s) 334. In contrast, in FIG. 9B, the additive manufacturing includes optionally forming porous region 200 with first member 332 configured to lockingly engage with, as shown in FIGS. 9C-F, second member 334 of base region 204. Here, base region 204 is formed with or modified to include second member(s) 334, e.g., by adding them to or machining them into surface 322 of base region 204. In FIGS. 8B-E, members 332, 334 include illustrative straight tongue-and-groove members, and in FIGS. 9B-F, members 332, 334 include illustrative dovetail tongue-and-groove members. Any form of members 332, 334 that can align and/or restrict movement between porous region 200 and either replacement region 206 or base region 204, can be employed. While one set of members 332, 334 are shown, more than one set can be used.

In certain embodiments, the additive manufacturing may also include forming any variety of improvements for component 202 in porous region 200 including, for example, structures not previously present in the removed, damaged part. For example, as shown in FIG. 11A, the additive manufacture may optionally include forming a cooling passage 336 in porous region 200. Cooling passage(s) 336 may extend in porous region 200 in any manner, e.g., in a serpentine path therein or extending through an external side surface of porous region 200. Any advantageous internal structural changes can be made in porous region(s) 200.

Referring to FIG. 8C and FIG. 9C-D, the method may further include positioning replacement region 206 and base region 204 together with porous region 200 therebetween. In FIG. 8C, because porous region 200 is formed on base region 204, the positioning may include positioning replacement region 206 on porous region 200, i.e., on a surface 352 of porous region 200. This approach is advantageous because any number and variety of replacement regions 206 can be manufactured and available for repair work on components 202. As an option, where members 332, 334 are provided, the positioning may include, as shown in FIG. 8C, lockingly engaging porous region 200 and replacement region 206 together with first and second members 332, 334. In FIGS. 9C-D, because porous region 200 is formed on replacement region 206, the positioning may include positioning porous region 200 (with replacement region 206 attached thereto) on base region 204, i.e., surface 352 of porous region 200 on surface 322 of base region 204. As an option, where members 332, 334 are provided, the positioning may include, as shown in FIG. 9C, lockingly engaging porous region 200 and base region 204 together with first and second members 332, 334. The positioning may include any type of required movement of regions together, e.g., vertical and/or horizontal alignment, sliding engagement, etc. Any necessary techniques to temporarily hold the regions in place may be used, e.g., clamps, adhesive tape, etc.

FIGS. 8D and 9E show infiltrating porous region 200 with braze material 310 to couple base region 204, replacement region 206, and porous region 200 together. Braze material 310 may include any now known or later developed brazing composition, such as but not limited to: GE (Alstom) B1P, Amdry^{™} D15, DF4B, or BRB, some the formulations of which are listed with other braze material formulations in the following table:

| **Alloy** | **Ni** | **Cr** | **Co** | **B** | **Al** | **Ta** | **Y** |
|---|---|---|---|---|---|---|---|
| **Amdry^{™} D15** | 65.10 | 15.30 | 10.30 | 2.30 | 3.50 | 3.50 | 0.00 |
| **Amdry^{™} BRB** | 70.50 | 14.00 | 9.00 | 2.50 | 4.00 | 0.00 | 0.00 |
| **Amdry^{™} DF4B** | 67.15 | 14.00 | 10.00 | 2.75 | 3.50 | 2.50 | 0.10 |

The infiltrating may include any now known or later developed brazing process such as using a vacuum brazing system, induction brazing system, and/or inert gas atmosphere heating system and related techniques. In one non-limiting example, the brazing may include, for example, applying the braze material and applying heat to liquefy it and to have it flow into, through and around porous region 200 through capillary action.

The infiltrating injects braze material 310 into porous region 200 based at least on a characteristic of the porosity or porosities thereof. As used herein, the infiltrating occurring based "at least on a characteristic" of the porosity indicates the porosity can result in different infiltration characteristics, such as braze material volume, pattern within the porosity, crystallization, chemistry gradients and composition, among other characteristics. However, as understood in the art, other factors can also impact the infiltration characteristics such as the type of braze material and characteristics of the brazing process such as but not limited to: temperature, pressure, positioning of component 202 and porous region 200. Different porosities within sub-regions of porous region 200 with the same braze material(s) 310 may have at least one different physical characteristic. In this manner, the porosities can be customized to select those physical characteristics inasmuch as the porosities can impact those physical characteristics. In one example, the porosity of certain sub-region(s) of porous region 200 may be higher (i.e., less dense) than the porosity of other porous sub-region(s) of porous region 200 and may include more braze material 310 therein. In another example, sub-regions of different porosities can be layers within porous region 200 from an interior to an outer edge sub-region 340 thereof. In another example, shown in FIG. 11A, different porosities can be used on different sides of porous region 200, e.g., sides 326 and 328 of porous region 200 may have different porosities. In this manner, different sides of porous region 200 and component 202 may have different physical characteristics. In terms of airfoils 150, 176 of nozzles 126 or blades 132, as shown in FIGS. 3 and 4, a pressure side outer wall 152, 178 of the airfoil may have different physical characteristics than a suction side outer wall 154, 180 of the airfoil, respectively. Any of the physical characteristics described herein can also be customized based on the different porosities and/or different braze materials. As noted, depending on the braze material 310 used, the different porosities may allow for customization of physical characteristic(s) of component 202, such as: joint adhesive bond strength, stress/strain resistance, ductility, wear resistance, oxidation resistance, thermal conductivity, electrical conductivity, surface roughness, hardness, and/or mass. Where variable porosities are present, the infiltrating includes causing braze material 310 to travel through and infiltrate varied porosities based on a characteristic thereof (e.g., gradient of the porosity, stepped porosity, among other things). In certain examples, more braze material 310 may result in a stronger joint adhesive bond strength, higher ductility, higher thermal or electrical conductivity or higher oxidation resistance, and less braze material 310 may result in less surface roughness, less hardness, lower joint adhesive bond strength, lower ductility, lower thermal or electrical conductivity or lower oxidation resistance. In any event, controlling the amount of braze material and the porosity of sub-regions of porous region 200 allows controlling physical characteristics of the final product. In addition, the multi-flow paths for braze material 310 using porous regions 300 may decrease the likelihood of a lack of fill and/or voids along a brazed joint compared to the conventional narrow gap-filling brazing process, and due to tight manufacturing tolerances required for narrow gap brazing. Hence, component 202 may be at least 98% solid despite the use of porous region 200 therein.

In certain embodiments, different braze materials 310 may be used in different parts of porous region 200, providing further customization of the coupling of porous region(s) 200 in component 202 and physical characteristics of regions of component 202. For example, referring to FIG. 11A, a first braze material 310A may be used on a first part or side 326 of component 202 and another braze material 310B, different than first braze material 310A, may be used on a different part or side 328 of component 202. In one example, referring to FIGS. 3, 4 and 11A, first part or side 326 of component 202 may be a first (concave, pressure) side outer wall 152, 178 of airfoil 150, 176 and second or side 328 of component 202 may be a second (convex, suction) side outer wall 154, 180 of an airfoil 150, 176. The different braze materials 310A, 310B, in addition to different porosity of sub-regions of porous region 200, on the different part or sides 326, 328 can be customized for the anticipated environment of component 202 at those locations. As will be recognized, the variations of braze materials and/or porous regions possible to address different situations are immense.

FIGS. 8E and 9F also show illustrative optional finishing steps for component 202, such as but not limited to machining to smooth exterior surfaces and remove excess braze material. As noted, the teachings of the disclosure may remove the need for other finishing steps typically used to address residual stresses present in the material post additive manufacturing, e.g., peening, heat treatment, hot isostatic pressing (HIP), among others.

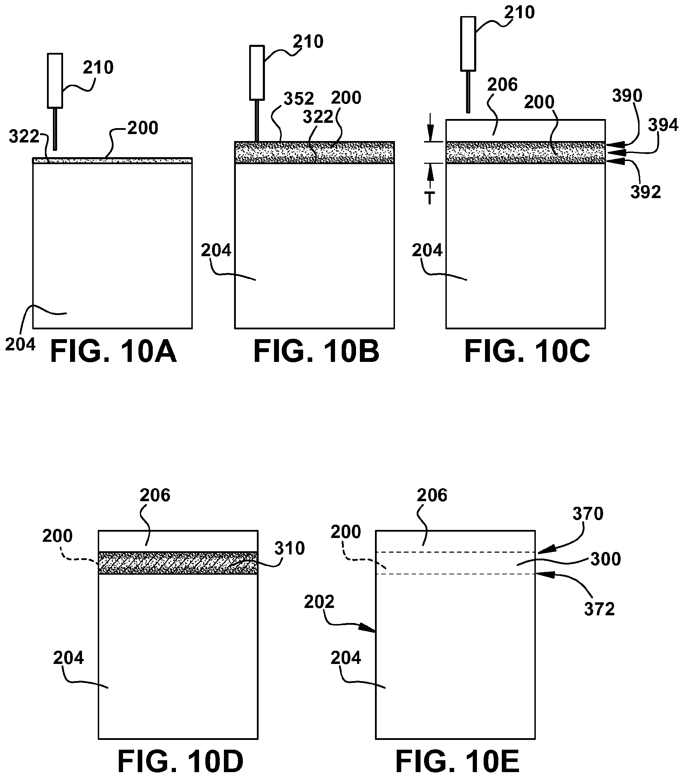

Referring to FIGS. 7A-B and FIGS. 10A-E, another embodiment of a method according to the disclosure will now be described. Referring to FIGS. 7A-B, the method may include removing to-be-replaced region 320 from dense base region 204 of component 202 leaving surface 322 on base region 204. The process may be as previously described herein.

FIGS. 10A-C show additively manufacturing porous region 200 on surface 322 of dense base region 204 and then dense replacement region 206 on porous region 200. More particularly, porous region 200 and then replacement region 206 are printed in sequence on surface 322 of base region 204. The switch from printing dense material for base region 204 or replacement region 206 and porous material for porous region 200 can be controlled using AM system 210, and in particular, operation of melting beam sources 212, 214, 216, 218, as the printing progresses, i.e., on the fly. As noted, porous region 200 may have a porosity between 2% to 50% open space volume to total volume of the porous region. Alternatively, porous region 200 may have any other porosity ranges described herein. Different porosities can be formed in porous region 200. As shown in FIG. 10C, the additive manufacturing may include forming the porosity higher in at least one of: a first section 390 of porous region 200 closest to replacement region 206 and a second section 392 of porous region 200 closest to base region 204 than at a third section 394 in porous region 200 between first section 390 and second section 392. That is sections 390 and/or 392 of porous region 200 closer to replacement region 206 and/or base region 204, respectively, are made more porous than a center section 394 of porous section 200. Other arrangements of different porosities are also possible. Porous region 200 may also have any variety of internal structures, e.g., cooling passages 336 (FIG. 11A), as described herein.

FIG. 10D shows infiltrating porous region 200 with braze material 310 to fix base region 204, replacement region 206 and porous region 200 together. The infiltrating may include any brazing process described herein. Here, "fix" indicates stronger coupling between the regions than present from just the additive manufacturing. With different porosities in different sections 390, 392, 394 of porous region 200, as described relative to FIG. 10C, more braze material 310 infiltrates into at least one of first section 390 and second section 392 than third section 394 of porous region 200. In this manner, and depending on braze material 310, portions of joints 370, 372 between porous region 200 and replacement region 206 and between porous region 200 and base region 204, respectively, can have customized physical characteristics, such as strong joint adhesive bond strength, oxidation resistance, stress resistance. As noted, different braze material 310 in different sections may also provide different physical characteristics.

FIG. 10E shows illustrative optional finishing steps for component 202, such as but not limited to machining to smooth exterior surfaces and remove excess braze material. As noted, the teachings of the disclosure may remove the need for other finishing steps, e.g., peening, heat treatment, hot isostatic pressing (HIP), among others.

With further regard to porous region 200, in any of the embodiments described herein, the dimensions of porous region 200 can be user selected to create any desired physical characteristic(s) of joints 370 (FIGS. 8E, 9F, 10E) or 372 (FIG. 10E) formed by porous region 200 and braze material 310. In most, but not all cases, porous region 200 has a horizontal shape and dimensions of surface 322 of base region 204 or surface 330 of replacement region 206 upon which it is additively manufactured. A thickness T (FIGS. 8C, 9D, 10C) of porous region 200 can be selected to absorb as much braze material 310 as desired to create any desired physical characteristics for joint 370, 372, e.g., better oxidation or stress resistance, between replacement region 206 and base region 204. Thickness T can be controlled by the number of layers of porous region 200 created using AM system 210 (FIG. 5). Porous region 200 and replacement region 206, collectively, have a shape and dimensions of the to-be-replaced region 320 (FIGS. 7A-B). In this manner, once complete with replacement region 206 coupled to base region 204 using porous region 200 and braze material 310, the final component 202 has the same dimensions as the initial to-be-repaired component 202X (FIGS. 7A-B).

With further regard to the porosity of porous region 200, FIG. 11A shows a top-down view of an illustrative porous region 200. A porosity of porous region 200 may be customized in a large variety of ways to direct braze material 310 (FIGS. 8D-E, 9E-F, 10D-E) in any manner desired and to create a desired physical characteristic of porous region 200 with braze material 310 infiltrated thereon. That is, porosity of porous region 200 is controlled, i.e., customized, to control flow of braze material therein during the brazing process that couples base region 204 and replacement region 206 together with porous region(s) 200. In this regard, a porosity of porous region 200 may vary along at least one of a length L (FIG. 11A), a width W (FIG. 11A), and a thickness T (FIGS. 8C, 9D, 10C) thereof between replacement region 206 and base region 204. That is, porous region 200 may have a variable porosity. The variable porosity change may be gradual, stepped or incremental. The sub-regions of different porosity may be different from each other in terms of at least one of the following characteristics: percentage of open space volume to total volume, pore shape, pore size, number of pores, and pore connecting passages. FIG. 11A shows one example in which an outer edge sub-region 340 of porous region 200 has a higher porosity than one or more inner porous sub-regions 342 located inwardly of outer edge sub-region 340. In this manner, more braze material 310 may infiltrate edge sub-region 340 where it meets edges of replacement region 206 and/or base region 204 to create a stronger joint. In other embodiments, as shown in the side view of FIG. 11B, a surface sub-region 344 or 346 of porous region 200 that may contact surface 322 of base region 204 and/or surface 330 of replacement region 206 may have higher porosity than one or more inner porous sub-regions 348 positioned inwardly of the surface sub-region(s) 344, 346. In this manner, more braze material 310 may infiltrate surface sub-region(s) 344, 346 where they meet respective surfaces of replacement region 206 and/or base region 204 to create a stronger joint 370 (FIGS. 8E, 9F, 10E), 372 (FIG. 10E). For example, as shown in FIG. 8B for the FIGS. 8A-E embodiment, the additive manufacturing may include forming the porosity higher in a location 350 at or near surface 352 of porous region 200 contacting replacement region 206 than at another location 354 in porous region 200 closer to surface 322 of base region 204. Similarly, as shown in FIG. 9B for the FIGS. 9A-F embodiment, the additive manufacturing may include forming the porosity higher in a location 356 at or near surface 352 of porous region 200 contacting surface 322 of base region 204 than at another location 360 in porous region 200 closer to surface 330 of replacement region 206. In either case, during the infiltrating step, more braze material 310 infiltrates into porous region 200 at the location with the higher porosity than at the location with lower porosity. It will be recognized that the options shown in FIGS. 8B, 9B, 11A and 11B can be used together or separately. In other embodiments, only certain sections of edge sub-region 340 and/or surface sub-regions 344, 346 may have different porosities. A large variety of options in terms of porosity within porous region 200 are possible to provide the desired braze material 310 infiltration and physical characteristics of the structure created by porous region 200 and braze material 310.

FIGS. 3, 4, 8E, 9F and 10E show embodiments of component 202 according to embodiments. Component 202 includes dense base region 204, dense replacement region 206 and AM porous region 200 between base region 204 and replacement region 206. Base region 204 and replacement region 206 may be dense material, as described herein, and in one example, may be solid material, i.e., with 0% porosity. As noted, porous region 200 has a porosity between 2% to 50% open space volume to total volume of the AM porous region. Braze material 310 infiltrates porous region 200 based at least on a characteristic of the porosity, making it non-porous and coupling base region 204, porous region 200 and replacement region 206 together. That is, porous region 200 with braze material 310 therein creates a solid or nearly solid section, i.e., a dense section, coupling base and replacement regions 204, 206 together. As noted, the porosity of porous region 200 may vary along at least one of a length, a width, and a thickness thereof between base region 204 and replacement region 206. Note, also, that base region 204 and replacement region 206 need not have the same porosity or the same materials. Porous region 200 may also include additional structure therein, e.g., cooling passage(s) 336 (FIG. 11A). As also shown in FIG. 11A, different braze materials 310A, 310B may be used in different sub-regions of porous region 200 to create different physical characteristics around or within porous region 200. While particular locations of different porosity of sub-region in porous region 200 have been illustrated herein, it is emphasized that the different porous sub-regions can be arranged in any manner to provide different braze material infiltration characteristics and different physical characteristics for component 202.

Embodiments of the disclosure may also include, as shown in FIGS. 1-2, turbomachine 100 including turbine assembly 110, and at least one component 202, as described herein. Component(s) 202 may take the form turbine stationary nozzle(s) 126, turbine rotating blade(s) 132 or other components of turbomachine 100. Porous region 200 can be used in a newly manufactured component or in a repaired component.

The disclosure provides various technical and commercial advantages, examples of which are discussed herein. For repairs, porous regions may provide a higher percentage of a base metal alloy (e.g., >60%) in certain areas that may result in improved physical characteristics compared to, e.g., pre-sintered preforms. Porous regions may also provide a welded/fused particle matrix (e.g., with a superalloy metal base) with braze material fill which is stronger compared to conventional metal particles surrounded by braze material. Multi-flow paths for the braze material using porous regions may also decrease the likelihood of a lack of fill and/or voids along a brazed joint compared to the conventional narrow gap-filling brazing process. The porous region can be formed with differences in porosity to allow for highly customized braze material flow. The porous region also accommodates greater joint gap dimensional variance compared to machined solid porous regions with narrow gaps for braze material. Repairs using the teachings of the disclosure are stronger than traditional narrow gap brazing processes, do not require certain post-repair finishing, yet provide improved physical characteristics compared to current techniques, such as pre-sintered preforms (PSPs). The porous region reduces stress at a joint between the dense regions and can be customized to create different physical characteristic(s) than just those of the base region and the replacement region. In addition, additive manufacture of metal coupon with porous region(s) as opposed to direct print of a dense coupon decreases or removes the possibility of strain age cracking (in addition to removing the need to shot peen, HIP, etc., post-processing).

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" or "about," as applied to a particular value of a range, applies to both end values and, unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

## Claims

1. A component (202), comprising:
a dense first region;
a dense second region;
an additively manufactured (AM) porous region (200) between the dense first region and the dense second region, the AM porous region (200) having a porosity between 2% to 50% open space volume to total volume of the AM porous region (200); and
a braze material (310) coupling the dense first region, the AM porous region (200) and the dense second region together, the braze material (310) infiltrated into the AM porous region (200) based at least on a characteristic of the porosity.

2. The component (202) of claim 1, wherein the porosity of the AM porous region (200) varies along at least one of a length, a width, and a thickness thereof between the dense first region and the dense second region.

3. The component (202) of claim 1, wherein the porosity is between 10% to 40% open space volume to total volume of the AM porous region (200).

4. The component (202) of claim 1, wherein the AM porous region (200) includes a cooling passage (336) therein.

5. The component (202) of claim 1, wherein the dense first region and the dense second region are solid material.

6. A method of repairing a component (202), the method comprising:
removing a to-be-replaced region (320) from a dense base region (204) of the component (202) leaving a first surface (322) on the dense base region (204);
additively manufacturing a porous region (200) on one of the first surface (322) of the dense base region (204) and a second surface (330) of a dense replacement region (206), the porous region (200) having a porosity between 2% to 50% open space volume to total volume of the porous region (200);
positioning the dense replacement region (206) and the dense base region (204) together with the porous region (200) therebetween; and
infiltrating the porous region (200) with a braze material (310) to couple the dense base region (204), the dense replacement region (206), and the porous region (200) together.

7. The method of claim 6, wherein the additive manufacturing includes forming the porous region (200) on the first surface (322) of the dense base region (204), and the positioning includes positioning the dense replacement region (206) on the porous region (200).

8. The method of claim 7, wherein the additive manufacturing includes forming the porosity higher in a first location at or near a third surface of the porous region (200) contacting the dense replacement region (206) than at a second location in the porous region (200) closer to the first surface (322) of the dense base region, wherein the infiltrating includes infiltrating more braze material (310) into the porous region (200) at the first location than at the second location.

9. The method of claim 7, wherein the additive manufacturing includes forming the porous region (200) with a first member (332) configured to lockingly engage with a second member (334) of the dense replacement region (206), wherein the positioning includes lockingly engaging the porous region (200) and the dense replacement region (206) together with the first and second members (332, 334).

10. The method of claim 6, wherein the additive manufacturing includes forming the porous region (200) on the second surface of the dense replacement region (206), and the positioning includes positioning the porous region (200) on the first surface of the dense base region (204).

11. The method of claim 10, wherein the additive manufacturing includes forming the porosity higher in a first location at or near a third surface of the porous region (200) contacting the first surface (322) of the dense base region (204) than at a second location in the porous region (200) closer to the second surface (330) of the dense replacement region (206), wherein the infiltrating includes infiltrating more braze material (310) into the porous region (200) at the first location than at the second location.

12. The method of claim 10, wherein the additive manufacturing includes forming the porous region (200) with a first member (332) configured to lockingly engage with a second member (334) of the dense base region (204), wherein the positioning includes lockingly engaging the porous region (200) and the dense base region (204) together with the first and second members (332, 334).

13. The method of claim 6, wherein the porous region (200) and the dense replacement region (206) collectively have a shape and dimensions of the to-be-replaced region (320).

14. The method of claim 6, wherein the porosity of the porous region (200) varies along at least one of a length, a width, and a thickness thereof between the dense replacement region (206) and the dense base region (320).

15. The method of claim 6, wherein the dense base region (320) and the dense replacement region (206) are solid material.
